# FASCICULE DE BREVET EUROPEEN

(11) **EP 3 296 154 B1**
(45) Date de publication et mention de la délivrance du brevet: **20.05.2020**
(21) Numéro de dépôt: 17181966.7
(22) Date de dépôt: 18.07.2017
(51) Int. Cl.: B60P 1/00

(54) **DISPOSITIF DE CHARGEMENT A PLATEFORME COULISSANTE**
BELADEVORRICHTUNG MIT SCHIEBEPLATTFORM
LOADING DEVICE WITH SLIDING PLATFORM

(30) Priorité: 12.08.2016 FR 1657741
(43) Date de publication de la demande: 21.03.2018
(73) Titulaire: Rolide, 59223 Roncq (FR)
(72) Inventeur: Montagne, Quentin, 59910 Bondues (FR); Serrurier, Julien, 59200 Tourcoing (FR)
(74) Mandataire: Plasseraud IP

(56) Documents cités:
- DE-A1-102014 009 800
- DE-U1-202013 105 571
- JP-U- S63 121 146
- US-A- 3 338 620
- US-A1- 2003 170 090

## Description

L'invention est relative à un dispositif d'aide au chargement/déchargement à plateforme coulissante, ainsi qu'à un procédé de fabrication d'un tel dispositif de chargement/déchargement.

Le domaine de l'invention est celui des véhicules utilitaires, en particulier véhicule léger, notamment de type pick-up, et plus particulièrement des dispositifs à plateformes coulissantes utilisés pour faciliter le chargement/déchargement de la surface arrière de chargement du véhicule.

De tels dispositifs sont aujourd'hui commercialisés, notamment sous la marque Bedslide®, ou encore la marque Cargo Glide ®. De tels dispositifs sont aussi connus des documents US 2003/170090 A1 et US 3 338 620 A.

Un tel dispositif à plateforme de chargement coulissante connu de l'état de la technique comprend :
- un châssis, fixe destiné à être ancré sur la surface arrière de chargement du véhicule, par exemple à la surface intérieure de la benne d'un pick-up,
- un premier châssis mobile, coulissant par rapport au châssis fixe par l'intermédiaire d'un premier système de glissière entre le châssis fixe et le premier châssis mobile,
- un second châssis mobile, coulissant par rapport au premier châssis mobile par l'intermédiaire d'un deuxième système de glissière entre le châssis fixe et le deuxième châssis mobile,
- la plateforme coulissante, rigidement solidaire du second châssis mobile.

Dans la position rétractée de la plateforme coulissante, cette dernière peut être rentrée entièrement dans les limites de la surface arrière de chargement du véhicule, permettant de fermer le hayon de la benne du véhicule.

Une fois le hayon du véhicule en position d'ouverture, la plateforme peut être tirée manuellement en coulissement en porte à faux arrière du véhicule jusqu'à la mise en butée du première système de glissière et du second système de glissière.

Dans cette position déployée, la plateforme facilite grandement le chargement (ou le déchargement) en permettant à l'opérateur un accès facilité à la plateforme coulissante en porte à faux arrière, sans nécessiter à ce dernier de rentrer et/ou de se pencher dans le véhicule pour ces opérations.

Les dispositifs aujourd'hui commercialisés peuvent être compatibles avec un certain nombre de véhicules légers, et être ajoutés à un véhicule existant.

Toutefois et selon les constatations des inventeurs, la plateforme coulissante est forcément de dimension en largeur inférieure à l'écartement entre les passages de roue en ce que ces passages de roue font saillie latéralement des deux côtés de la surface arrière de véhicule.

Les dispositifs à plateforme coulissante de l'état de la technique présentent ainsi l'inconvénient d'offrir, dans la position rétractée de la plateforme coulissante, une surface de chargement non plane, en raison de la présence de zones latérales sur la surface arrière du véhicule, situées au-dessus et au-dessous de chaque passage de roue, de part et d'autre de la plateforme coulissante, non recouvertes par la plateforme coulissante.

Ces zones latérales forment des cavités en sur-profondeur de la plateforme coulissante où peuvent s'accumuler des petits objets et/ou de la saleté, qui, en raison de leur faible accessibilité dégradent la nettoyabilité du véhicule, et augmentent les risques de perte des petits objets transportés.

Le but de la présente invention est de pallier les inconvénients précités en proposant un dispositif à plateforme coulissante qui peut équiper la surface arrière d'un véhicule présentant des passages de roue en saillie, avantageusement sans dégrader la nettoyabilité de la surface arrière de chargement, et sans augmenter le risque de perte d'objet.

D'autres buts et avantages apparaîtront au cours de la description qui va suivre qui n'est donnée qu'à titre indicatif et qui n'a pas pour but de la limiter.

Aussi l'invention concerne un dispositif de chargement à plateforme coulissante destiné à équiper la surface arrière d'un véhicule présentant des passages de roue en saillie, comprenant :
- un châssis fixe destiné à être ancré sur la surface arrière de chargement du véhicule,
- la plateforme coulissante,
- un système de guidage entre la plateforme coulissante et ledit châssis fixe,
ladite plateforme coulissante pouvant passer d'une position rétractée sur le châssis fixe, vers une position déployée en porte à faux dudit châssis fixe.

Selon l'invention, le dispositif comporte des plateformes auxiliaires, fixes, portées par le châssis fixe, de même niveau que la surface plane de la plateforme coulissante, lesdites plateformes auxiliaires définissant deux échancrures latérales destinées à être de forme complémentaire auxdits passages de roue, et en ce que dans ladite position rétractée de la plateforme coulissante, les plateformes auxiliaires prolongent latéralement la surface plane de la plateforme coulissante.

Selon un mode de réalisation ledit système de guidage entre la plateforme coulissante et ledit châssis fixe comprend :
- un premier châssis mobile, coulissant par rapport au châssis fixe par l'intermédiaire d'un premier système de glissière entre le châssis fixe et le premier châssis mobile,
- un second châssis mobile, coulissant par rapport au premier châssis mobile par l'intermédiaire d'un deuxième système de glissière entre le châssis fixe et le deuxième châssis mobile,
   et dans lequel ladite plateforme coulissante est rigidement solidaire du second châssis mobile.

Selon l'invention, le châssis fixe comprend un cadre formé de deux longerons et de deux traverses solidaires par leurs extrémités, et dans lequel des supports s'étendent latéralement à partir des longerons vers l'extérieur du cadre afin de maintenir les plateformes auxiliaires en porte à faux des longerons
; Selon des caractéristiques optionnelles de l'invention prises seules ou en combinaison :
- chaque support reliant un des longerons à la plateforme auxiliaire correspondante comprend une équerre formée par deux profilés tubulaires, perpendiculaires, mis bout à bout par leur extrémité, ladite équerre présentant à l'une de ses extrémités libres une platine de fixation à la surface latérale d'un longeron, et à son autre extrémité libre une platine de fixation avec la sous-face de la plateforme auxiliaire ;
- le châssis fixe présente plusieurs fers d'ancrage repartis sur la hauteur du cadre, chacun des fers d'ancrage reliant les deux longerons selon une direction en biais par rapport aux traverses, non perpendiculaire aux longerons ;
- chacun des fers d'ancrage comprend une pluralité d'alésages répartis sur la longueur du fer, lesdits alésages étant destinés pour le réglage de la position d'organes de fixation assurant la fixation dudit châssis fixe au véhicule ;
- la plateforme coulissante comprend une plaque, ainsi que des profilés de protection périphériques, bordant la plaque au moins le long de ses bords latéraux, voire de son bord arrière et de son bord avant ;
- les plateformes auxiliaires comprennent chacun une plaque, ainsi qu'un profilé de protection bordant le bord intérieur de ladite plaque destinée à être à proximité immédiate de la plateforme coulissante dans ladite position rétractée ;
- le ou au moins partie des profilés de protection de la plateforme auxiliaire et/de le ou chaque profilé de protection de la plateforme coulissante comprend une section en U, recevant au jeu d'emboitement le bord de la plaque, prolongée par une section tubulaire, à fonction de rainure d'accroche, de même épaisseur présentant une fente supérieure longitudinale débouchant à partir de la paroi supérieure de la section tubulaire formant l'entrée de la rainure ;
- la surface supérieure du bord de la plaque est grugée d'une épaisseur correspondante à l'épaisseur de l'aile supérieure du profilé venant en recouvrement sur la surface supérieure de la plaque, et dans lequel ladite partie grugée de la plaque reçoit au jeu d'emboitement l'aile supérieure du profilé de protection en recouvrement, ladite surface supérieure du profilé de protection étant affleurante à la surface supérieure non grugée de ladite plaque jouxtant ledit profilé de protection.

Selon un mode de réalisation, le premier système de glissière entre le châssis fixe et le premier châssis mobile, comprend :
- des premiers rails dudit châssis fixe et des premiers galets dudit premier châssis mobile destinés à coopérer au roulement avec lesdits premiers rails,
- des deuxièmes rails du premier châssis mobile et des seconds galets du châssis fixe destinés à coopérer au roulement avec lesdits deuxièmes rails.

Selon un mode de réalisation, le deuxième système de glissière entre le premier châssis mobile et le deuxième châssis mobile comprend :
- des premiers rails dudit premier châssis mobile et des premiers galets dudit deuxième châssis mobile destinés à coopérer au roulement avec lesdits premiers rails,
- des deuxièmes rails du deuxième châssis mobile et des deuxièmes galets dudit premier châssis mobile destinés à coopérer au roulement avec lesdits deuxièmes rails.

Selon un mode de réalisation, le premier système de glissière et/ou ledit deuxième système de glissière présente :
- des galets en particulier lesdits premier galets et second galets, à axe de rotation horizontale destinés à reprendre la charge, destinée à coopérer chacun au roulement avec une aile horizontale d'un rail,
- des systèmes à bille porteuse orientés de manière à coopérer chacun au roulement avec une aile verticale d'un rail afin d'assurer un guidage latéral.

Selon un mode de réalisation, le dispositif présente à l'arrière de la plateforme coulissante un système de ridelle en saillie destiné à assurer le maintien des objets présents sur la plateforme coulissante.

Ledit système de ridelle peut-être de longueur réglage suivant la direction en largeur de la plateforme, comprenant :
- une partie centrale et deux parties latérales, distinctes, prolongeant respectivement en longueur ladite partie centrale à ces deux extrémités,
- des moyens de réglage permettant d'assurer la fixation des parties latérales en différentes positions sur la longueur de la partie centrale.

En particulier, la partie centrale et les parties latérales sont sous forme de panneaux verticaux, les moyens de réglage comprenant des ouvertures oblongues orientées suivant la longueur des panneaux et suivant la direction de réglage, destinées à être traversées par des organes de fixation tels que des boulons.

Selon un mode de réalisation, le dispositif peut présenter un système de verrouillage du plateau coulissant au moins dans ladite position rétractée et/ou dans ladite position déployée de la plateforme coulissante, voire dans une position intermédiaire, comprenant :
- un organe mobile, solidaire du deuxième châssis mobile, saillant en direction du châssis fixe et un organe de blocage correspondant solidaire du châssis fixe, ledit organe de verrouillage pouvant passer d'un état d'engagement dans laquelle l'organe pénètre au moins une ouverture de l'organe de blocage vers un état escamoté dans laquelle l'organe mobile échappe ladite ouverture,
- un dispositif de manœuvre, agencé au niveau du bord avant de la plateforme coulissante,
- un transmission mécanique, telle une tringle, reliant ledit dispositif de manœuvre audit organe mobile et assurant le passage de l'organe de verrouillage de l'état d'engagement vers l'état escamoté lors d'une action sur le dispositif de manœuvre.

Le dispositif de manœuvre peut comprendre un bouton poussoir, agencé sur une poignée rigidement solidaire du second châssis mobile.

Selon un mode de réalisation :
- l'organe de blocage peut comprendre un profilé orienté suivant la longueur dudit châssis fixe et présentant plusieurs ouvertures de blocage pour l'organe mobile ;
- ledit organe mobile peut être déplaçable suivant la direction de l'organe de blocage sous la contrainte d'un ressort, une action manuelle sur le dispositif de manœuvre contraignant l'organe mobile vers son état escamoté.

Selon un mode de réalisation, le dispositif peut permettre un déploiement d'au moins 80% de la longueur de la plateforme coulissante en porte-à faux dudit châssis fixe dans ladite position déployée.

L'invention concerne encore un véhicule automobile comprenant une surface arrière de chargement présentant en saillie deux passages de roue, ladite surface arrière du véhicule étant équipée d'un dispositif de chargement à plateforme coulissante selon l'invention dont les échancrures latérales reçoivent au jeu d'ajustement lesdits passages de roue et de sorte que dans ladite position rétractée de la plateforme coulissante le dispositif de chargement forme une surface plane sur la totalité de la largeur de la surface arrière dudit véhicule.

L'invention concerne encore un procédé de fabrication d'un dispositif de chargement à plateforme coulissante selon l'invention, destiné à équiper un véhicule comprenant une surface arrière de chargement présentant en saillie deux passages de roue, ledit procédé présentant les étapes suivantes :
- obtention des dimensions de la surface arrière du véhicule,
- dimensionnement des plateformes auxiliaires de sorte que, dans ladite position rétractée de la plateforme coulissante, la réunion de la surface de la plateforme mobile et de la surface des plateformes auxiliaires forme une surface plane continue sur la totalité de la largeur de la surface arrière dudit véhicule.

L'invention sera mieux comprise à la lecture de la description suivante accompagnée des dessins en annexe parmi lesquels :

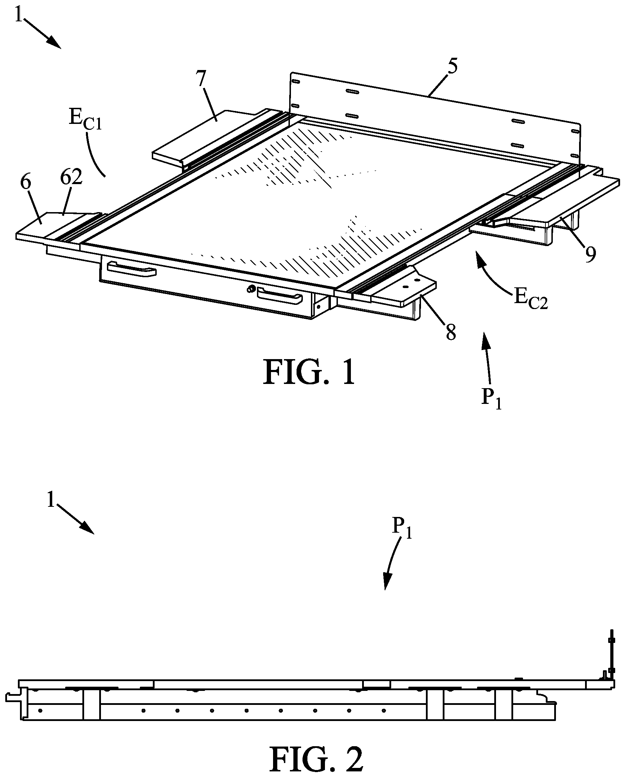

- La figure 1 est une vue en perspective d'un dispositif de chargement conforme à l'invention selon un mode de réalisation, dans ladite position rétractée de ladite plateforme coulissante,
- La figure 2 est une vue de côté du dispositif tel qu'illustré à la figure 1,

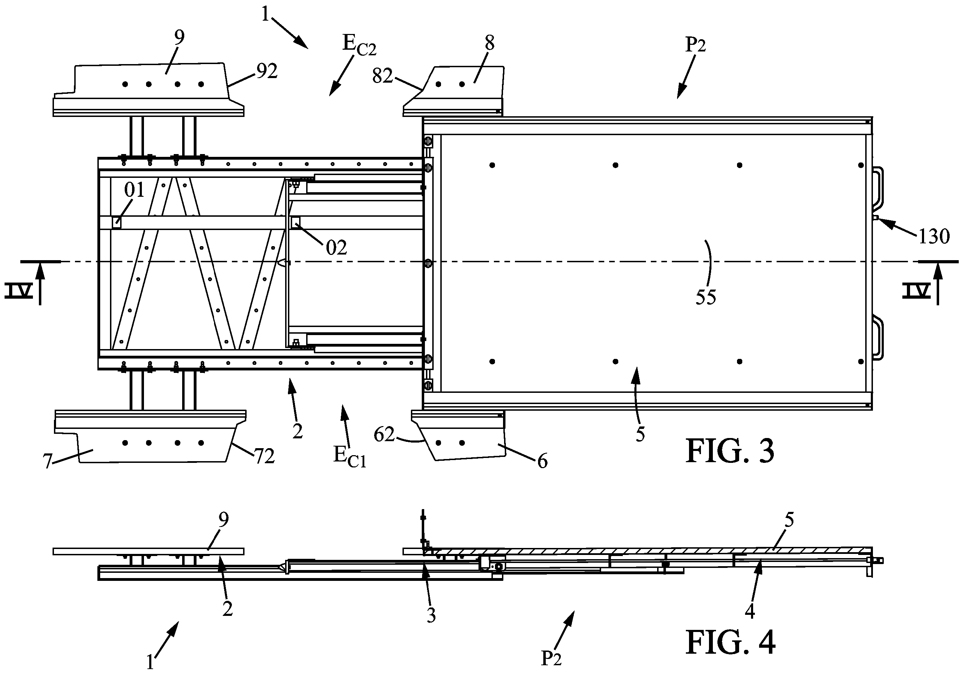

- La figure 3 est une vue de dessus d'un dispositif de chargement dans ladite position déployée de la plateforme coulissante,
- La figure 4 est une vue selon la coupe IV-IV telle qu'illustrée à la figure 3,

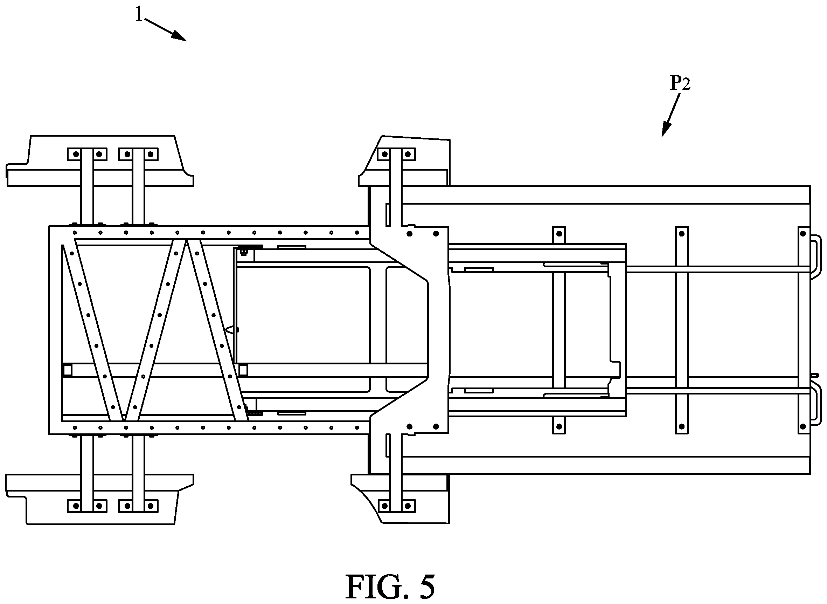

- La figure 5 est une vue de dessous de la figure 3,
- La figure 6 est une vue en éclaté du dispositif de la figure 1,

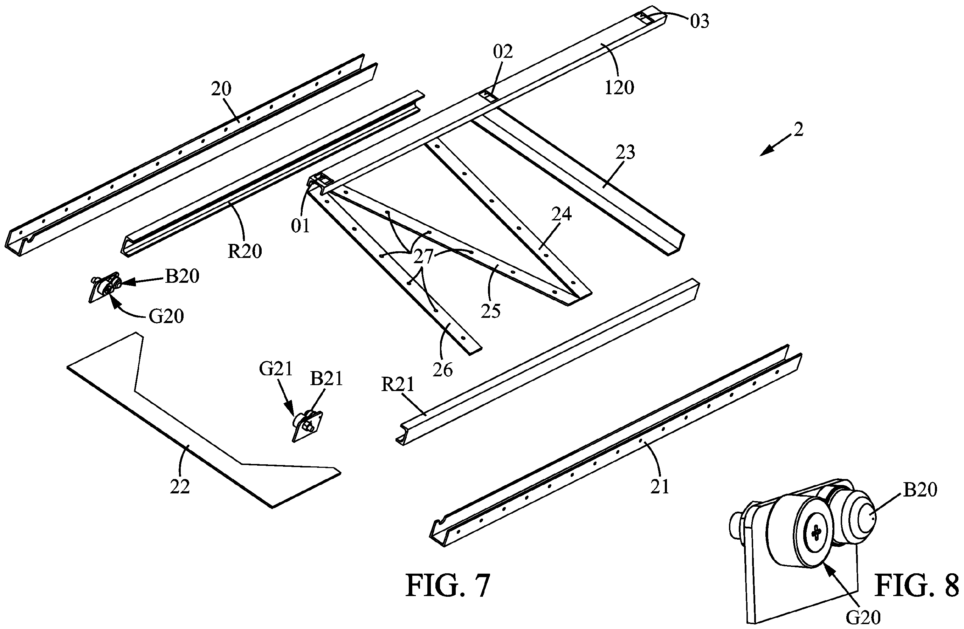

- La figure 7 est une vue en éclaté dudit châssis fixe du dispositif de la figure 1,
- La figure 8 est une vue de détail d'un ensemble comprenant un galet destiné à coopérer au roulement avec l'aile horizontale d'un rail de guidage pour permettre la reprise de la charge, ainsi que d'une bille porteuse destinée à coopérer avec l'aile du rail de guidage pour assurer le guidage latéral de la plateforme coulissante,

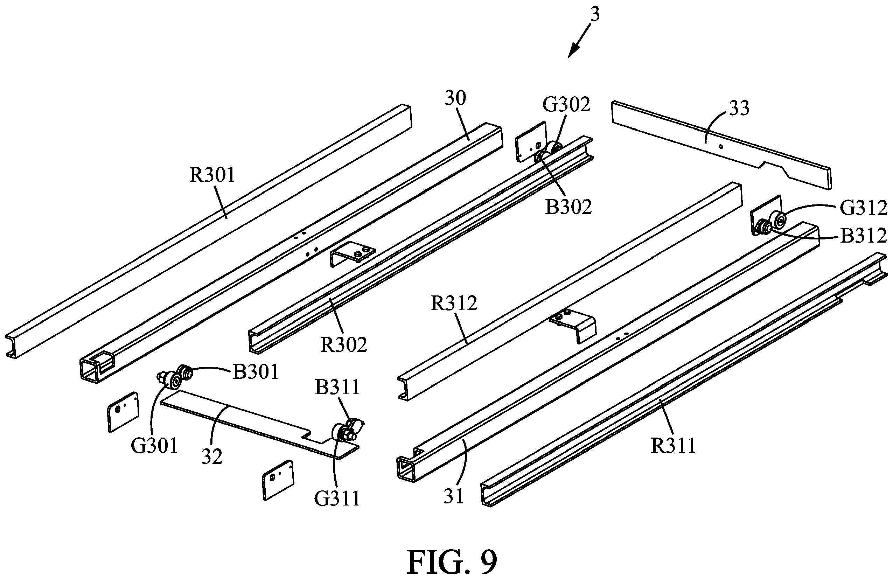

- La figure 9 est une vue en éclaté dudit premier châssis mobile du dispositif de la figure 1,

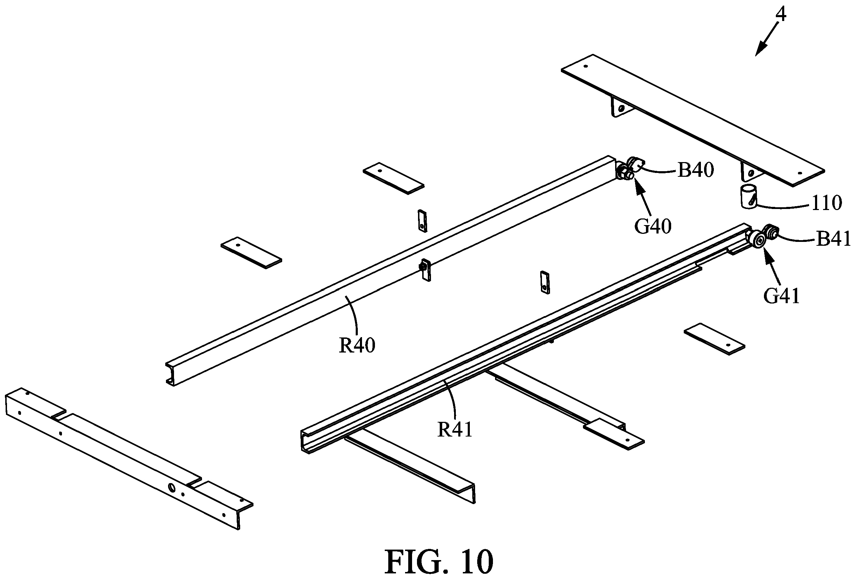

- La figure 10 est une vue en éclaté du second châssis mobile du dispositif de la figure 1.

Aussi l'invention concerne un dispositif 1 de chargement à plateforme coulissante destiné à équiper la surface arrière d'un véhicule présentant des passages de roue en saillie.

Une telle plateforme trouve une application particulière pour équiper la surface arrière de véhicules, en particulier légers, telle que la surface de la benne d'un véhicule de type pick-up.

Un tel dispositif 1 comprend :
- un châssis fixe 2 destiné à être ancré sur la surface arrière de chargement du véhicule,
- la plateforme coulissante 5,
- un système de guidage (au coulissement) entre la plateforme coulissante 5 et ledit châssis fixe, et selon une direction de coulissement.

La plateforme coulissante 5 peut passer d'une position rétractée P1 sur le châssis fixe 2, vers une position déployée P2 en porte à faux dudit châssis fixe 2.

Ledit système de guidage entre la plateforme coulissante 5 et ledit châssis fixe 2 peut comprendre :
- un premier châssis 3 mobile, coulissant par rapport au châssis fixe par l'intermédiaire d'un premier système de glissière entre le châssis fixe et le premier châssis mobile,
- un second châssis mobile 4, coulissant par rapport au premier châssis mobile par l'intermédiaire d'un deuxième système de glissière entre le châssis fixe et le deuxième châssis mobile, ladite plateforme coulissante 5 étant rigidement solidaire du second châssis mobile 4.

Lors de l'actionnement de la plateforme coulissante 5 de sa position rétractée vers sa position déployée (ou inversement), le premier châssis mobile 3 coulisse sur le châssis fixe 2, et ledit deuxième châssis mobile 4 coulisse le long dudit premier châssis mobile 3, suivant une même direction.

La course de déplacement de la plateforme est limitée par des butées de fin de course entre ses trois éléments (châssis fixe, premier châssis mobile et deuxième châssis mobile) et suivant les deux sens de déploiement, lors du déploiement et lors de la rétractation.

Selon l'invention, le dispositif 1 comporte des plateformes auxiliaires 6, 7, 8, 9, fixes, portées par le châssis fixe 2, de même niveau que la surface plane de la plateforme coulissante 5.

Avantageusement, ces plateformes auxiliaires 6 à 9 définissent deux échancrures Ec1, Ec2 latérales destinées à être de forme complémentaire auxdits passages de roue.

Dans ladite position rétractée P1 de la plateforme coulissante 5, les plateformes auxiliaires 6, 7, 8, 9 prolongent latéralement la surface plane de la plateforme coulissante 5.

Selon un mode de réalisation (illustré à titre indicatif), l'une repérée E1 des échancrures latérales est définie par un inter-espace entre deux plateformes auxiliaires, distinctes, repérées 6 et 7, mutuellement espacées, l'autre échancrure latérale, repérée E2 étant définie par un inter-espace entre deux autres plateformes auxiliaires distinctes repérées 8 et 9, agencées de l'autre côté de la plateforme coulissante.

Avantageusement, les échancrures latérales Ec1, Ec2 reçoivent, au jeu d'ajustement près, respectivement lesdits deux passages de roue et de sorte que dans ladite position rétractée de la plateforme coulissante 5, le dispositif de chargement forme une surface plane (constituée par la réunion de la surface de support de la plateforme coulissante et de la surface de support des plateformes auxiliaires) sur la totalité de la largeur de la surface arrière dudit véhicule. L'invention concerne encore un tel véhicule équipé d'un tel dispositif de chargement à plateforme coulissante.

Le dispositif de chargement selon l'invention permet avantageusement de supprimer les cavités latérales formées entre les parois latérales de la surface arrière du véhicule et la plateforme coulissante, et telles qu'elles sont rencontrées dans l'état de la technique mentionné dans l'introduction.

Un tel dispositif de chargement peut équiper la surface arrière d'un véhicule, notamment véhicule utilitaire tel qu'un pick-up lors de la fabrication du véhicule, ou encore comme être ajouté après sa fabrication à titre d'accessoire.

L'invention concerne ainsi encore un procédé de fabrication d'un dispositif de chargement à plateforme coulissante selon l'invention, destiné à équiper un véhicule comprenant une surface arrière de chargement présentant en saillie deux passages de roue, ledit procédé présentant les étapes suivantes :
- obtention des dimensions de la surface arrière du véhicule, ces dimensions étant définies entre les parois latérales, y compris les parois latérales formées par les passages de roue,
- dimensionnement des plateformes auxiliaires 6 à 9 de sorte que, dans ladite position rétractée de la plateforme coulissante, la réunion de la surface de la plateforme mobile et de la surface des plateformes auxiliaires forme une surface plane continue sur la totalité de la largeur de la surface arrière dudit véhicule, voire de préférence sur la totalité de dimension en longueur de la surface arrière de chargement.

On entend ici par la dimension en largeur de la surface arrière du véhicule la dimension séparant les parois latérales de la surface arrière (de chargement) du véhicule, et la dimension en longueur la dimension de la surface arrière suivant l'axe longitudinal du véhicule.

Selon un mode de réalisation, le châssis fixe 2 peut comprendre un cadre formé de deux longerons 20, 21 et de deux traverses 22, 23 solidaires par leurs extrémités. Le maintien des plateformes auxiliaires peut être obtenu par des supports 10 à 15 s'étendant latéralement à partir des longerons 20,21 vers l'extérieur du cadre afin de maintenir les plateformes auxiliaires 6, 7, 8, 9 en porte à faux des longerons 20,21. Les positions des supports 10 à 15 sont telles que ces derniers n'obstruent pas les inter-espaces définis au niveau des échancrures Ec1, Ec2 en ce que ces inter-espaces sont destinés à recevoir les passages de roue du véhicule.

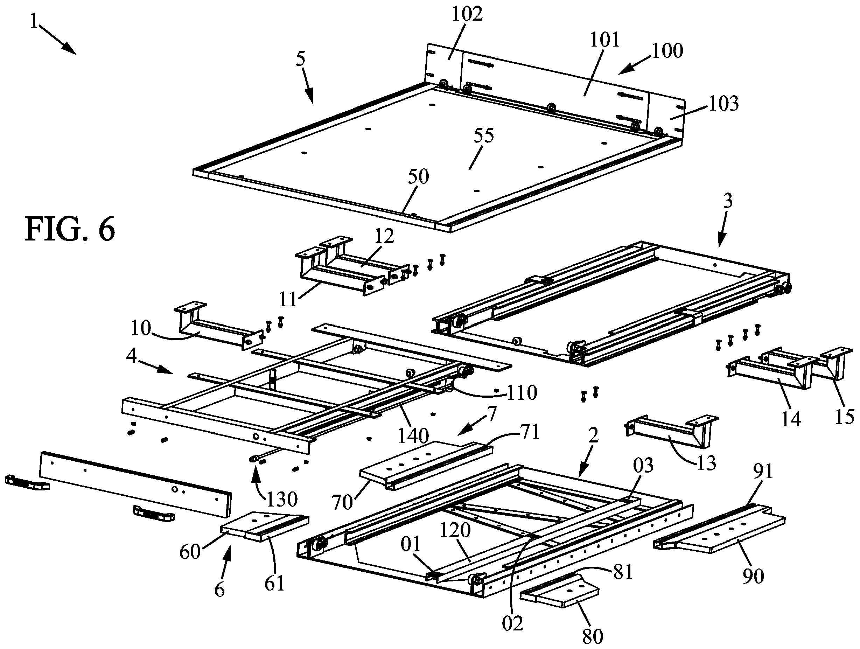

La figure 6 illustre à titre d'exemple non limitatif ces supports 10 à 15. Chaque support 10 ; 11 ; 12 ; 13 ; 14 ; 15 relie l'un des longerons 20,21 à la plateforme auxiliaire 6 ; 7 ; 8 ; 9 correspondante. Chaque support peut comprendre une équerre formée par deux profilés tubulaires, perpendiculaires, mis bout à bout par leur extrémité. Par exemple, et selon l'exemple illustré, les deux profilés tubulaires de section rectangulaire présentent deux extrémités biseautées, notamment coupées à 45°, mises bout à bout, et reliées par une soudure externe. Ladite équerre présentant encore à l'une de ses extrémités libres une platine de fixation à la surface latérale d'un longeron, et à son autre extrémité libre une platine de fixation avec la sous-face de la plateforme auxiliaire. La platine de fixation au longeron et la platine de fixation à la plaque auxiliaire peuvent chacune présenter des ouvertures pour le passage d'organes de fixation, tels que des boulons. Le premier profilé de chaque support 10 à 15 peut s'étendre à angle droit des longerons, suivant la direction des traverses, vers l'extérieur du cadre, et le deuxième profilé, à la verticale, vers le haut.

Selon un mode de réalisation, le châssis fixe 2 peut présenter un ou de préférence plusieurs fers d'ancrage 24, 25, 26, lesdits fers étant répartis sur la hauteur du cadre : le ou chacun des fers d'ancrage relie les deux longerons 20,21 selon une direction en biais par rapport aux traverses 22,23, non perpendiculaires aux longerons 20,21. Le ou chacun des fers d'ancrage 24, 25,26 comprend de préférence une pluralité d'alésages 27 répartis sur la longueur du fer, lesdits alésages 27 étant destinés pour le réglage de la position d'organes de fixation assurant la fixation dudit châssis fixe au véhicule.

La fonction du ou des fers d'ancrage est celui de la fixation et de l'ancrage du châssis fixe sur la surface arrière du véhicule, et plus particulièrement de proposer un ensemble de points de fixation et de manière à autoriser l'ancrage du dispositif sur le plus grand nombre de véhicule du marché. Autrement dit, le ou les fers d'ancrage répondent au problème de l'universalité de la fixation du dispositif aux véhicules du marché.

Le nombre et l'orientation en biais des fers d'ancrage répondent à cet objectif en offrant le réglage de la position du ou des points d'ancrage, non seulement sur la largeur du véhicule, mais également suivant la direction en longueur. Lors de l'ancrage du châssis fixe à la surface arrière du véhicule, le poseur sélectionne le ou les points d'ancrage sur les fers, de position(s) le(s) plus adaptée(s) à la fixation du châssis fixe sur le véhicule. Le nombre des fers d'ancrage peut être compris entre deux et quatre, tel que trois ou quatre.

Selon un mode de réalisation, la plateforme coulissante 5 peut comprendre une plaque 50, ainsi que des profilés de protection périphériques 51 à 54, bordant la plaque au moins le long de ses bords latéraux, voire de son bord arrière et de son bord avant.

La plaque 50 peut être à base de bois, tel qu'un panneau de bois plein, ou encore un panneau de contre-plaqué. Le panneau à base de bois peut être recouvert d'un revêtement de protection 55, imperméable, voire de préférence anti-dérapant. Les profilés de protection, en métal ont pour fonction de protéger les chants du panneau, voire de rigidifier la plateforme coulissante, et afin d'augmenter sa résistance à la charge. La plaque 50 peut être sensiblement rectangulaire, et les profilés de protection peuvent former un cadre protégeant les quatre chants de la plaque 50.

Selon un mode de réalisation, les plateformes auxiliaires 6 à 9 peuvent comprendre chacune une plaque 60 ; 70 ; 80 ; 90, ainsi qu'un profilé de protection 61 ; 71 ; 81 ; 91. Ce profilé de protection 61 ; 71 ; 81 ; 91 borde le bord intérieur de ladite plaque 60 ; 70 ; 80 ; 90 : ce profilé est destiné à être à proximité immédiate de la plateforme coulissante 5 dans ladite position rétractée P1.

De manière avantageuse, le ou au moins partie des profilés de protection 61 ; 71 ; 81 ; 91 de la plateforme auxiliaire et/de le ou au moins partie des profilé de protection 51 ; 52 ;53 de la plateforme coulissante 5 peut comprendre une section en U 16, recevant au jeu d'emboitement le bord de la plaque, prolongée par une section tubulaire 17, à fonction de rainure d'accroche, de même épaisseur que la section en U.

Outre sa fonction d'élément de protection, voire de rigidification, le ou ces profilés peuvent présenter une fonction supplémentaire de système d'accroche pour le montage d'accessoires sur la plateforme, tel que le montage de cloisons latérales, des porte-vélo ou autres venant se fixer dans la ou les rainures d'accroche.

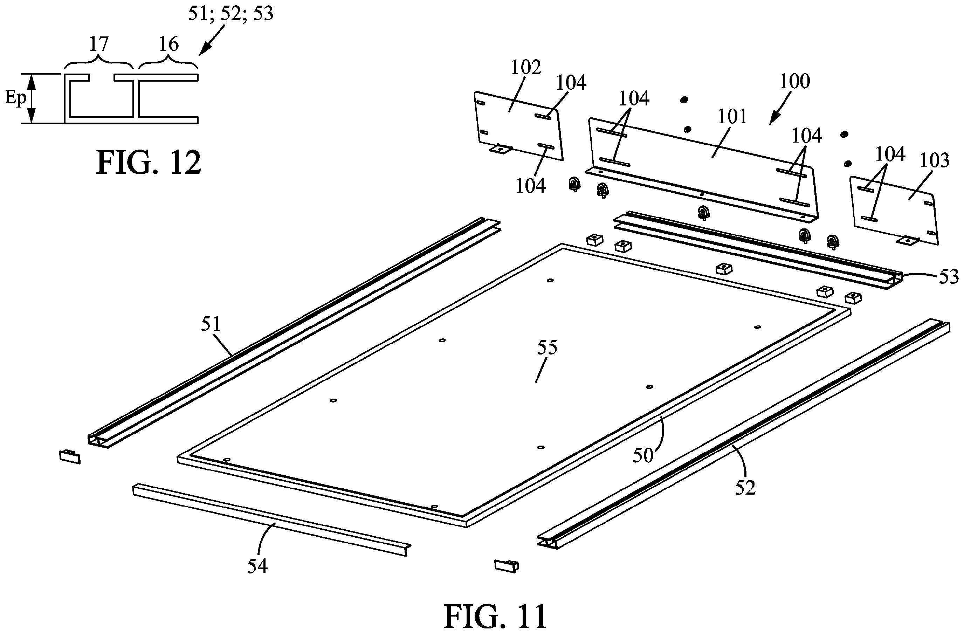

Un tel profilé est illustré à titre d'exemple non limitatif à la figure 12. Il présente une section en U de dimension ajustée à la dimension de l'épaisseur de plaque de manière à recevoir ladite plaque : la dimension en épaisseur ep, à savoir la dimension séparant les deux ailes du U est ajustée à la dimension épaisseur de la plaque : une fois emboitée, le chant de plaque vient en butée contre l'aile de liaison du U, les ailes latérales du U s'étendant en dessus et en dessous du panneau.

La section tubulaire repérée 17 est sensiblement de même épaisseur ep. Cette section tubulaire présente une fente supérieure longitudinale débouchant à partir de la paroi supérieure de la section tubulaire. Cette fente forme l'entrée de rainure d'accroche. L'entrée de rainure est inférieure à la largeur de la rainure.

Selon un mode de réalisation (illustré à la figure 11) la surface supérieure du bord de plaque 50 ; 60 ; 70 ; 80 ; 90 peut être grugée d'une épaisseur correspondante à l'épaisseur de l'aile supérieure du profilé 51 ; 52 ; 53 ; 54; 61; 71 ; 81 ; 91 venant en recouvrement sur la surface supérieure de la plaque. Avantageusement, ladite partie grugée de la plaque reçoit au jeu d'emboitement l'aire supérieure du profilé venant en recouvrement, ladite surface supérieure du profilé étant alors affleurante à la surface supérieure non grugée de ladite plaque jouxtant ledit profilé.

Ainsi, et avantageusement, la surface de la plateforme est parfaitement plane, et en particulier sans différence de niveau entre la zone supérieure de jonction entre chaque profilé de protection et la plaque bordée par le profilé : la surface plane du dispositif dans la position rétractée de la plateforme ne présente aucune irrégularité sur lequel un opérateur est susceptible de butée lorsqu'un opérateur marche dessus.

Selon un mode de réalisation, le premier système de glissière entre le châssis fixe et le premier châssis mobile, comprend :
- des premiers rails R20, R21 dudit châssis fixe 2 et des premiers galets G301, G311 dudit premier châssis 3 mobile destinés à coopérer au roulement avec lesdits premiers rails R20, R21,
- des deuxièmes rails R301, R311 du premier châssis mobile 3 et des seconds galets G20, G21 du châssis fixe 2 destinés à coopérer au roulement avec lesdits deuxièmes rails R301, R311.

Une telle construction à double rail a pour fonction de reprendre des charges lourdes.

Les premiers rails R20, R21 sont au nombre de deux, constitués essentiellement par deux profilés en C longeant respectivement les longerons 20 et 21 du châssis fixe. Les premiers galets G301, G311, au nombre de deux, sont des roulements venant se loger respectivement dans les rails et coopérer avec les ailes inférieures horizontales des profilés, et afin de reprendre la charge verticale.

Ces galets peuvent être respectivement associés, en particulier sur une même platine, à des billes porteuses B301, B311 en position couchée afin que la bille omnidirectionnelle de chaque bille porteuse coopère avec l'aile verticale du profilé, assurant ainsi un guidage latérale de la plateforme.

De même les deuxièmes rails R301, R311 sont au nombre de deux, constitués essentiellement par deux profilés en C longeant respectivement des longerons 30 et 31 du premier châssis mobile, en particulier côté extérieur. Les premiers seconds galets G20, G21, au nombre de deux, sont des roulements venant se loger respectivement dans les rails et coopérer avec les ailes inférieurs horizontale des profilés, et afin de reprendre la charge verticale. Ces galets peuvent être associés sur une même platine à des billes porteuses B20, B21 en position couchée afin que la bille omnidirectionnelle de chaque bille porteuse coopère avec l'aile verticale du profilé du rail R301 ou R311, assurant ainsi un guidage latérale de la plateforme.

Selon un mode de réalisation, le deuxième système de glissière entre le premier châssis mobile 3 et le deuxième châssis mobile 4, comprend :
- des premiers rails R302, R312 dudit premier châssis 3 mobile et des premiers galets G40, G41 dudit deuxième châssis 4 mobile destinés à coopérer au roulement avec lesdits premiers rails R302, R312,
- des deuxièmes rails R40, R41 du deuxième châssis mobile 4 et des deuxièmes galets G302, G312 dudit premier châssis mobile 3 destinés à coopérer au roulement avec lesdits deuxièmes rails R40, R41.

Là encore, une telle construction à double rail a pour fonction de reprendre des charges lourdes.

Les premiers rails R302, R312 sont au nombre de deux, constitués essentiellement par deux profilés en C longeant respectivement les longerons 20 et 21 du premier châssis mobile, notamment coté intérieur. Les premiers galets G40, G341, au nombre de deux, sont des roulements venant se loger respectivement dans les rails et coopérer avec les ailes inférieures horizontales des profilés, et afin de reprendre la charge verticale.

Ces galets peuvent être respectivement associés sur une même platine à des billes porteuses B40, B341 en position couchée afin que la bille omnidirectionnelle de chaque bille porteuse coopère avec l'aile verticale du profilé, assurant ainsi un guidage latérale de la plateforme.

De même, les deuxièmes rails R40, R41 sont au nombre de deux, constitués essentiellement par deux profilés en C du deuxième châssis mobile 4. Les seconds galets G302, G312, au nombre de deux, sont des roulements venant se loger respectivement dans les rails et coopérer avec les ailes inférieures horizontales des profilés, et afin de reprendre la charge verticale. Ces galets peuvent être chacun respectivement associés sur une même platine à des billes porteuses B302, B312 en position couchée afin que la bille omnidirectionnelle de chaque bille porteuse coopère avec l'aile verticale du profilé du rail R40 ou R41, assurant ainsi un guidage latérale de la plateforme.

Avantageusement, le premier système de glissière combiné au deuxième système de glissière orienté suivant la même direction peuvent avantageusement autoriser un déploiement d'au moins 80% de la longueur de la plateforme coulissante 5 en porte-à faux dudit châssis fixe 2 dans ladite position déployée (entièrement), par exemple compris entre 85% et 90%. Selon les connaissances des inventeurs, une telle amplitude au déploiement est bien supérieure aux performances des plateformes connues, qui se limite à un déploiement de la plateforme coulissante de l'ordre de 60%.

Selon un mode de réalisation, le dispositif peut présenter à l'arrière de la plateforme coulissante 5 un système de ridelle 100 en saillie destiné à assurer le maintien des objets présents sur la plateforme coulissante 5. Ce système de ridelle 100 assure le maintien des objets présents sur la plateforme coulissante 5 lorsqu'un opérateur manipule la plateforme au déploiement, à savoir de la position rétractée P1 de la plateforme coulissante 5 vers la position déployée P2. Ce système de ridelle s'étend sensiblement perpendiculairement à la surface de support de la plateforme coulissante 5.

Avantageusement, ce système de ridelle peut être de longueur réglage suivant la direction en largeur de la plateforme, comprenant :
- une partie centrale 101 et deux parties latérales 102, 103, distinctes, prolongeant respectivement en longueur ladite partie centrale 101 à ses deux extrémités,
- des moyens de réglage permettant d'assurer la fixation des parties latérales 102, 103 en différentes positions sur la longueur de la partie centrale 101.

Par exemple la partie centrale 101 et les parties latérales 102, 103 sont sous forme de panneaux, sensiblement verticaux, les moyens de réglage comprenant des ouvertures oblongues 104 orientées suivant la longueur des panneaux et suivant la direction de réglage. Ces ouvertures oblongues 104 sont destinées à être traversées par des organes de fixation tels que des boulons.

Les ouvertures oblongues 104 autorisent différents positionnements des parties latérales 102, 103 sur la partie centrale 101, en étant traversées par des organes de fixation tels que des boulons. Une fois la longueur du système de ridelle réglée, les organes de fixation tels que les boulons assurent fermement le maintien de position. Un tel système de ridelle de longueur aisément réglage permet d'adapter la longueur du système de ridelle aux spécificités du véhicule.

Le dispositif de chargement comprend de préférence un système de verrouillage du plateau coulissant au moins dans ladite position rétractée et/ou dans ladite position déployée de la plateforme coulissante, voire dans une position intermédiaire.

Un tel système de verrouillage comprend :
- un organe mobile 110, solidaire du deuxième châssis mobile 4, saillant en direction du châssis fixe et un organe de blocage 120 correspondant solidaire du châssis fixe 3, ledit organe de verrouillage 110 pouvant passer d'un état d'engagement dans laquelle l'organe mobile 4 pénètre au moins une ouverture 01, 02, 03 de l'organe de blocage 120 vers un état escamoté dans laquelle l'organe mobile échappe à ladite ouverture,
- un dispositif de manœuvre 130, agencé au niveau du bord avant de la plateforme coulissante 5,
- une transmission mécanique 140, telle qu'une tringle ou un câble, reliant ledit dispositif de manœuvre audit organe mobile et assurant le passage de l'organe de verrouillage de l'état d'engagement vers l'état escamoté lors d'une action sur le dispositif de manœuvre (de poussée ou de traction).

Un tel système de verrouillage est illustré à titre d'exemple non limitatif à la figure 6.

Le dispositif de manœuvre 130 peut comprendre un bouton poussoir, agencé notamment sur une poignée rigidement solidaire du second châssis mobile 5. L'organe de blocage 120 peut comprendre un profilé orienté suivant la longueur dudit châssis fixe 2, solidarisé aux traverses du châssis, et présentant plusieurs ouvertures 01, 02, 03 de blocage pour l'organe mobile 110, et en particulier :
- une première ouverture O1 coopérant avec l'organe mobile 110 dans la position rétractée P1 de la plateforme coulissante 5,
- une deuxième ouverture O2 coopérant avec l'organe mobile 110 dans la position intermédiaire de la plateforme coulissante 5,
- une troisième ouverture O3 coopérant avec l'organe mobile 110 dans la position déployée de la plateforme coulissante 5.

Ledit organe mobile 110 peut être déplaçable suivant la direction de l'organe de blocage 120 sous la contrainte d'un ressort, une action manuelle sur dispositif de manœuvre 130 contraignant l'organe mobile vers son état escamoté.

Selon le mode de réalisation illustré, l'organe mobile 110 est contraint par le ressort en direction de l'organe de blocage 120 afin de provoquer le verrouillage automatique de position dès que l'organe mobile vient au droit d'une ouverture O1 à 03 de l'organe 120. Le déverrouillage nécessite ainsi l'action de l'opérateur sur le bouton poussoir de l'organe de manœuvre. Cette poussée est transmise par la tringle de la transmission 141 jusqu'à l'organe mobile 110. L'extrémité de cette tringle comprend une came coopérant avec un suiveur de came de l'organe mobile 110. Ce suiveur de came transforme le mouvement de poussée transmis par la tringle en un mouvement de relevage de l'organe mobile à l'encontre de la force de rappel du ressort, à savoir de son état d'engagement vers son état escamoté.

L'invention concerne encore un procédé de fabrication d'un dispositif de chargement à plateforme coulissante selon l'invention, destiné à équiper un véhicule comprenant une surface arrière de chargement présentant en saillie deux passages de roue.

Ce procédé comprend les étapes suivantes :
- obtention des dimensions de la surface arrière du véhicule,
- dimensionnement des plateformes auxiliaires 6 à 9 de sorte que, dans ladite position rétractée de la plateforme coulissante, la réunion de la surface de la plateforme mobile 5 et de la surface des plateformes auxiliaires 6 à 9 forme une surface plane continue sur la totalité de la largeur de la surface arrière dudit véhicule.

En particulier, le contour des plateformes auxiliaires 6 à 9 est ajusté aux dimensions de la surface arrière du véhicule :
- les deux plateformes auxiliaires 6 et 7, situées latéralement du même côté du dispositif présentent des bords courbes 62, 72, en regard, destinées à épouser le contour du passage de roue de sur ce côté,
- les deux plateformes auxiliaires 8 et 9, situées latéralement de l'autre côté du dispositif présentent des bords courbes 82, 92, en regard, destinées à épouser le contour du passage de roue de sur ce côté.

La première étape d'obtention des dimensions de la surface arrière du véhicule peut être obtenue par la mise en œuvre d'appareil de numérisation et d'acquisition 3D, en particulier un scanner sans contact, et l'acquisition d'un nuage de points acquis lors de cette étape d'acquisition.

L'utilisation d'un logiciel de CAO permet ensuite d'exploiter ce fichier numérique pour redessiner le contour et le dimensionnement des plateformes auxiliaires 6 à 9 afin de couvrir la totalité de la surface arrière du véhicule. Ce procédé permet de dimensionner les plateformes auxiliaires, avantageusement sans dépendre des données des constructeurs automobiles, et/ou de tenir compte des incertitudes de dimensionnement de la surface arrière du véhicule inhérentes aux tolérances de production.

### NOMENCLATURE

1. Dispositif de chargement,

2. Châssis fixe,
20,21. Longerons (cadre châssis fixe),
22, 23. Traverses (cadre châssis fixe),
24 à 26. Fers d'ancrage,
27. Alésages (Fers d'ancrage),
R20, R21. Premier rails appartenant au premier système de glissière, respectivement solidaires des longerons (20,21)
G20, G21. Deuxième galets appartenant au premier système de glissière respectivement solidaire des longerons (20,21),

3. Premier châssis mobile,
30,31. Longerons du cadre du premier châssis mobile,
32,33. Traverses du cadre du premier châssis mobile.
R.301, R311. Deuxièmes rails appartenant au premier système de glissière solidaires du premier châssis mobile.
G301, G311. Premiers galets appartenant au premier système de glissière solidaires du premier châssis mobile.
R302, R312. Premiers rails appartenant au deuxième système de glissière solidaires du premier châssis mobile.
G302, G312. Deuxièmes galets appartenant au deuxième système de glissière solidaires du premier châssis mobile.

4. Deuxième châssis mobile,
R40, R41. Deuxièmes rails appartenant au deuxième système de rail solidaires du deuxième châssis mobile,
G40, G 41. Premiers galets appartenant au deuxième système de rail solidaires du deuxième châssis mobile,

5. Plateforme coulissante,
50. Plaque,
51 à 54. Profilés de protection périphériques, respectivement latéraux (gauche et droite), avant et arrière,
55. Revêtement de protection

6 à 9. Plateformes auxiliaire (fixes),
60, 70, 80, 90. Plaques (Plateformes auxiliaires)
61, 71, 81, 91. Profilés de protection (plaques),
62,72, 82, 82. Bords courbés (ajustés aux passages de roue),

100. Système de ridelle,
101. Partie centrale (Système de ridelle),
102,103. Partie latérales (Système de ridelle),
104. Ouvertures oblongues (Moyen de réglage de la longueur dudit système de ridelle),
110. Organe mobile du système de verrouillage solidaire du deuxième châssis mobile (Système de verrouillage),
120. Organe de blocage (Système de verrouillage),
130. Dispositif de manœuvre (Système de verrouillage),
140. Transmission mécanique (tringle).

10 à 15. Supports reliant rigidement les plateformes auxiliaires aux longerons,
16. Section en U des profilés de protection,
17. Section tubulaire avec fente des profilés de protection,

Ec1, Ec2. Echancrures latérales pour les passages de roue.
Ep. Dimension en épaisseur du profilé de protection (Figure 12).
O1, O2, O3. Ouverture de l'organe de blocage définissant trois positions de verrouillage de la plateforme, respectivement en la position déployée, en la position intermédiaire et en la position rétractée.
P1. Position rétractée de la plateforme coulissante,
P2. Position déployée de la plateforme coulissante.

## Revendications

1. Dispositif (1) de chargement à plateforme coulissante destiné à équiper la surface arrière d'un véhicule présentant des passages de roue en saillie, comprenant :
- un châssis fixe (2) destiné à être ancré sur la surface arrière de chargement du véhicule,
- la plateforme coulissante (5),
- un système de guidage entre la plateforme coulissante (5) et ledit châssis fixe (2),
ladite plateforme coulissante (5) pouvant passer d'une position rétractée (P1) sur le châssis fixe (2), vers une position déployée (P2) en porte à faux dudit châssis fixe (2)
**caractérisé en ce que** le dispositif comporte des plateformes auxiliaires (6, 7, 8, 9), fixes, portées par le châssis fixe (2), de même niveau que la surface plane de la plateforme coulissante (5), lesdites plateformes auxiliaires (6 à 9) définissant deux échancrures (Ec1, Ec2) latérales destinées à être de forme complémentaire auxdits passages de roue, et **en ce que** dans ladite position rétractée (P1) de la plateforme coulissante (5), les plateformes auxiliaires (6,7,8,9) prolongent latéralement la surface plane de la plateforme coulissante (5), et dans lequel le châssis fixe (2) comprend un cadre formé de deux longerons (20, 21) et de deux traverses (22, 23) solidaires par leurs extrémités, et dans lequel des supports (10 à 15) s'étendant latéralement à partir des longerons (20,21) vers l'extérieur du cadre afin de maintenir les plateformes auxiliaires (6, 7, 8, 9) en porte à faux des longerons (20,21).

2. Dispositif selon la revendication 1, dans lequel ledit système de guidage entre la plateforme coulissante (5) et ledit châssis fixe (2) comprend :
- un premier châssis (3) mobile, coulissant par rapport au châssis fixe par l'intermédiaire d'un premier système de glissière entre le châssis fixe et le premier châssis mobile,
- un second châssis mobile (4), coulissant par rapport au premier châssis mobile par l'intermédiaire d'un deuxième système de glissière entre le châssis fixe et le deuxième châssis mobile
et dans lequel ladite plateforme coulissante (5) est rigidement solidaire du second châssis mobile (4).

3. Dispositif selon la revendication 2, chaque support (10 ; 11 ; 12, 13 ; 14 ; 15) reliant un des longerons (20,21) à la plateforme auxiliaire (6 ; 7 ; 8 ; 9) correspondante comprend une équerre formée par deux profilés tubulaires, perpendiculaires, mis bout à bout par leur extrémité, ladite équerre présentant à l'une de ses extrémités libres une platine de fixation à la surface latérale d'un longeron, et à son autre extrémité libre une platine de fixation avec la sous-face de la plateforme auxiliaire.

4. Dispositif selon la revendication 2 ou 3, dans lequel le châssis fixe (2) présente plusieurs fers d'ancrage (24, 25, 26) repartis sur la hauteur du cadre, chacun des fers d'ancrage reliant les deux longerons (20,21) selon une direction en biais par rapport aux traverses (22,23), non perpendiculaire aux longerons (20,21).

5. Dispositif selon la revendication 4, dans lequel chacun des fers d'ancrage (24, 25,26) comprend une pluralité d'alésages (27) répartis sur la longueur du fer, lesdits alésages (27) étant destinés pour le réglage de la position d'organes de fixation assurant la fixation dudit châssis fixe au véhicule.

6. Dispositif selon l'une des revendications 1 à 5, dans lequel la plateforme coulissante (5) comprend une plaque (50), ainsi que des profilés de protection périphériques (51 à 54), bordant la plaque au moins le long de ses bords latéraux, voire de son bord arrière et de son bord avant.

7. Dispositif selon l'une des revendications 1 à 6, dans lequel les plateformes auxiliaires (6 à 9) comprennent chacun une plaque (60 ; 70 ; 80 ; 90), ainsi qu'un profilé de protection (61 ; 71 ; 81 ; 91), bordant le bord intérieur de ladite plaque (60 ; 70 ; 80 ; 90) destinée à être à proximité immédiate de la plateforme coulissante (5) dans ladite position rétractée (P1).

8. Dispositif selon la revendication 6 et 7, dans lequel le ou au moins partie des profilés de protection (61 ; 71 ; 81 ; 91) de la plateforme auxiliaire et/de le ou chaque profilé de protection (51 ;52 ;53) de la plateforme coulissante (5) comprend une section en U (16), recevant au jeu d'emboitement le bord de la plaque, prolongée par une section tubulaire, à fonction de rainure d'accroche, de même épaisseur (Ep) présentant une fente supérieure longitudinale débouchant à partir de la paroi supérieure de la section tubulaire formant l'entrée de la rainure.

9. Dispositif selon l'une des revendications 6 à 8, dans lequel la surface supérieure du bord de plaque (50 ; 60 ; 70 ; 80 ; 90) est grugée d'une épaisseur correspondante à l'épaisseur d'une aile supérieure du profilé (51 ; 52 ; 53 ; 54 ; 61 ; 71 ; 81 ; 91) venant en recouvrement sur la surface supérieure de la plaque, et dans lequel ladite partie grugée de la plaque reçoit au jeu d'emboitement l'aile supérieure du profilé de protection, ladite surface supérieure du profilé de protection étant affleurante à la surface supérieure non grugée de ladite plaque (50 ; 60 ; 70 ; 80 ; 90) jouxtant ledit profilé de protection.

10. Dispositif selon la revendication 2 seule ou prise en combinaison avec l'une des revendications 3 à 9, dans lequel le premier système de glissière entre le châssis fixe et le premier châssis mobile, comprend :
- des premiers rails (R20, R21) dudit châssis fixe (2) et des premiers galets (G301, G311) dudit premier châssis (3) mobile destinés à coopérer au roulement avec lesdits premiers rails (R20, R21),
- des deuxièmes rails (R301, R311) du premier châssis mobile (3) et des seconds galets (G20, G21) dudit châssis fixe (2) destinés à coopérer au roulement avec lesdits deuxièmes rails (R301, R311).

11. Dispositif selon la revendication 2 seule ou prise en combinaison avec l'une des revendications 3 à 10, dans lequel le deuxième système de glissière entre le premier châssis mobile (3) et le deuxième châssis mobile (4), comprend :
- des premiers rails (R302, R312) dudit premier châssis (3) mobile et des premiers galets (G40, G41) dudit deuxième châssis (4) mobile destinés à coopérer au roulement avec lesdits premiers rails (R302, R312),
- des deuxièmes rails (R40, R41) du deuxième châssis mobile (4) et des deuxièmes galets (G302, G312) dudit premier châssis mobile (3) destinés à coopérer au roulement avec lesdits deuxièmes rails (R40, R41).

12. Dispositif selon les revendications 10 et 11 dans lequel le premier système de glissière et/ou ledit deuxième système de glissière présente :
- des galets (G20, G21, G301, G311, G302, G312, G40, G41) en particulier lesdits premiers galets et second galets, à axe de rotation horizontale destinés à reprendre la charge, destinés à coopérer chacun au roulement avec une aile horizontale d'un rail,
- des systèmes à bille porteuse (B20, B21, B301, B311, B302, B312, B40, B41), orientés de manière à coopérer chacun au roulement avec une aile verticale d'un rail afin d'assurer un guidage latéral.

13. Dispositif selon l'une des revendications 1 à 12, présentant à l'arrière de la plateforme coulissante (5) un système de ridelle (100) en saillie destiné à assurer le maintien des objets présents sur la plateforme coulissante (5).

14. Dispositif selon la revendication 13, dans lequel ledit système de ridelle est de longueur réglage suivant la direction en largeur de la plateforme, comprenant :
- une partie centrale (101) et deux parties latérales (102, 103), distinctes, prolongeant respectivement en longueur ladite partie centrale (101) à ces deux extrémités,
- des moyens de réglage permettant d'assurer la fixation des parties latérales (102, 103) en différentes positions sur la longueur de la partie centrale (101).

15. Dispositif selon la revendication 14, dans lequel la partie centrale (101) et les parties latérales (102, 103) sont sous forme de panneaux verticaux, les moyens de réglage comprenant des ouvertures oblongues (104) orientées suivant la longueur des panneaux et suivant la direction de réglage, destinées à être traversées par des organes de fixation tels que des boulons.

16. Dispositif selon la revendication 2, comprenant un système de verrouillage du plateau coulissant au moins dans ladite position rétractée et/ou dans ladite position déployée de la plateforme coulissante, voir dans une position intermédiaire, comprenant :
- un organe mobile (110), solidaire du deuxième châssis mobile (4), saillant en direction du châssis fixe et un organe de blocage (120) correspondant solidaire du châssis fixe (3), ledit organe de verrouillage (110) pouvant passer d'un état d'engagement dans laquelle l'organe pénètre au moins une ouverture (O1, O2, O3) de l'organe de blocage (120) vers un état escamoté dans laquelle l'organe mobile échappe ladite ouverture,
- un dispositif de manœuvre (130), agencé au niveau du bord avant de la plateforme coulissante (5),
- une transmission mécanique (140), telle une tringle, reliant ledit dispositif de manœuvre audit organe mobile et assurant le passage de l'organe de verrouillage de l'état d'engagement vers l'état escamotée lors d'une action sur le dispositif de manœuvre.

17. Dispositif selon la revendication 16, dans lequel le dispositif de manœuvre (130) comprend un bouton poussoir, agencé sur une poignée rigidement solidaire du second châssis mobile (4).

18. Dispositif selon la revendication 16 ou 17, dans lequel :
- l'organe de blocage (120) comprend un profilé orienté suivant la longueur dudit châssis fixe (2) et présentant plusieurs ouvertures (O1, O2, O3) de blocage pour l'organe mobile (110),
- ledit organe mobile est déplaçable suivant la direction de l'organe de blocage sous la contrainte d'un ressort, une action manuelle sur le dispositif de manœuvre (130) contraignant l'organe mobile vers son état escamoté.

19. Dispositif selon l'une des revendications 1 à 18, présentant un déploiement d'au moins 80% de la longueur de la plateforme coulissante (5) en porte-à faux dudit châssis fixe (2) dans ladite position déployée.

20. Véhicule automobile comprenant une surface arrière de chargement présentant en saille deux passages de roue, ladite surface arrière du véhicule étant équipée d'un dispositif (1) de chargement à plateforme coulissante selon l'une des revendications 1 à 19 dont les échancrures latérales (Ec1, Ec2) reçoivent au jeu d'ajustement lesdits passage de roue et de sorte que dans ladite position rétractée de la plateforme coulissante (5), le dispositif de chargement forme une surface plane sur la totalité de la largeur de la surface arrière dudit véhicule.

21. Procédé de fabrication d'un dispositif de chargement à plateforme coulissante selon l'une des revendications 1 à 19, destiné à équiper d'un véhicule comprenant une surface arrière de chargement présentant en saillie deux passages de roue, ledit procédé présentant les étapes suivantes :
- obtention des dimensions de la surface arrière du véhicule,
- dimensionnement des plateformes auxiliaires (6 à 9) de sorte que, dans ladite position rétractée de la plateforme coulissante, la réunion de la surface de la plateforme mobile (5) et de la surface des plateformes auxiliaires (6 à 9) forme une surface plane continue sur la totalité de la largeur de la surface arrière dudit véhicule.

## Patentansprüche

1. Beladevorrichtung (1) mit Schiebeplattform, vorgesehen zum Ausrüsten der Rückseite eines Fahrzeugs, welche vorstehende Radkästen aufweist:
- ein feststehendes Fahrgestell (2) zum Verankern auf der Laderückseite des Fahrzeugs,
- die Schiebeplattform (5),
- ein Führungssystem zwischen der Schiebeplattform (5) und dem besagten festen Gehäuse (2),
wobei die besagte Schiebeplattform (5) von einer in das feststehende Fahrgestell (2) eingefahrenen Stellung (P1) in eine von dem besagten feststehenden Fahrgestell (2) freitragende ausgefahrene Stellung (P2) übergehen kann
**dadurch gekennzeichnet, dass** die Vorrichtung feststehende Hilfsplattformen (6, 7, 8, 9) umfasst, welche von dem feststehenden Fahrgestell (2) getragen sind, auf derselben Höhe wie die ebene Oberfläche der Schiebeplattform (5), wobei die besagten Hilfsplattformen (6 bis 9) zwei seitliche Einrückungen (Ec1, Ec2) begrenzen, welche dazu vorgesehen sind, von komplementärer Form zu den besagten Radkästen zu sein, und dass die Hilfsplattformen (6, 7, 8, 9) in der besagten eingefahrenen Stellung (P1) der Schiebeplattform (5) die ebene Oberfläche der Schiebeplattform (5) seitlich verlängern, und bei welcher das feststehende Fahrgestell (2) einen von zwei Holmen (20, 21) und zwei durch ihre Enden verbundenen Querstreben (22,23) gebildeten Rahmen umfasst, und wobei sich bei dieser Träger (10 bis 15) seitlich von den Holmen (20, 21) nach außerhalb des Rahmens erstrecken, um die Hilfsplattformen (6, 7, 8, 9) freitragend von den Holmen (20, 21) zu halten.

2. Vorrichtung nach Patentanspruch 1, bei welcher das besagte Führungssystem zwischen der Schiebeplattform (5) und dem besagten feststehenden Fahrgestell (2) umfasst:
- ein erstes bewegliches Fahrgestell (3), welches relativ zu dem feststehenden Fahrgestell mithilfe eines ersten Gleitsystems zwischen dem feststehenden Fahrgestell und dem ersten beweglichen Fahrgestell gleitet,
- ein zweites bewegliches Fahrgestell (4), welches relativ zu dem ersten beweglichen Fahrgestell mithilfe eines zweiten Gleitsystems zwischen dem feststehenden Fahrgestell und dem zweiten beweglichen Fahrgestell gleitet
und bei welchem die besagte Schiebeplattform (5) starr mit dem zweiten beweglichen Fahrgestell (4) verbunden ist.

3. Vorrichtung nach Patentanspruch 2, wobei jeder Träger (10; 11; 12; 13; 14; 15), welcher einen der Holme (20, 21) mit der zugehörigen Hilfsplattform (6; 7; 8; 9) verbindet, ein Quadrat umfasst, welches durch zwei röhrenförmige, senkrechte Profile gebildet ist, welche mit ihren Enden angrenzend platziert sind, wobei das besagte Quadrat an einem seiner freien Enden eine Montageplatte zur Befestigung an der Seitenfläche eines Holmes und an seinem anderen freien Ende eine Montageplatte zur Befestigung mit der Unterfläche der Hilfsplattform aufweist.

4. Vorrichtung nach Patentanspruch 2 oder 3, bei welchem das feststehende Fahrgestell (2) mehrere Ankereisen (24, 25, 26) aufweist, welche über die Höhe des Rahmens verteilt sind, wobei jedes der Ankereisen die beiden Holme (20, 21) in einer Richtung in einem Winkel zu den Querstreben (22, 23) verbindet, nicht senkrecht zu den Holmen (20, 21).

5. Vorrichtung nach Patentanspruch 4, bei welcher jedes der Ankereisen (24, 25, 26) eine Vielzahl von Bohrungen (27) über die Länge des Eisens verteilt umfasst, wobei die besagten Bohrungen (27) zur Regelung der Stellung der Befestigungselemente vorgesehen sind, um die Befestigung des besagten feststehenden Fahrgestells am Fahrzeug sicherzustellen.

6. Vorrichtung gemäß einem der Patentansprüche 1 bis 5, bei welcher die Schiebeplattform (5) eine Platte (50) umfasst, sowie äußere Schutzprofile (51 bis 54), welche an die Platte mindestens entlang deren Seitenrändern, bzw. ihrer Rückseite oder ihrer Vorderseite angrenzen.

7. Vorrichtung gemäß einem der Patentansprüche 1 bis 6, bei welcher die Hilfsplattformen (6 bis 9) jeweils eine Platte (60; 70; 80; 90) umfassen, sowie ein Schutzprofil (61; 71; 81; 91), welches an die Innenseite der besagten Platte (60; 70; 80; 90) angrenzt, welche vorgesehen ist, um in unmittelbarer Nähe der besagten Schiebeplattform (5) in der besagten eingefahrenen Stellung (P1) zu sein.

8. Vorrichtung gemäß einem der Patentansprüche 6 und 7, bei welcher das oder zumindest ein Teil der Schutzprofile (61; 71; 81; 91) der Hilfsplattform und/des oder jedes Schutzprofils (51; 52; 53) der Schiebeplattform (5) einen U-förmigen Abschnitt (16) umfasst, welcher im Eingriff die Seite der Platte aufnimmt, verlängert durch einen röhrenförmigen Abschnitt, als Eingriffsnut, mit gleicher Dicke (Ep) aufweisend einen oberen Längsschlitz, welcher ausgehend von der oberen Wand des röhrenförmigen Abschnitts, welcher den Eingang der Nut bildet, verläuft.

9. Vorrichtung gemäß einem der Patentansprüche 6 bis 8, bei welcher die obere Fläche des besagten Rands der Platte (50; 60; 70; 80; 90) gekerbt ist mit einer Dicke, welche der Dicke eines oberen Flügels des Profils (51; 52; 53; 54; 61; 71; 81; 91) entspricht, welcher in Überlappung auf der oberen Fläche der Platte kommt, und bei welcher der besagte gekerbte Teil der Platte im Eingriff den oberen Flügel des Schutzprofils aufnimmt, wobei die besagte obere Fläche des Schutzprofils bündig mit der nicht gekerbten oberen Fläche der besagten Platte (50; 60; 70; 80; 90), welche an das besagte Schutzprofil angrenzt, ist.

10. Vorrichtung nach dem Patentanspruch 2, alleine oder in Verbindung mit einem der Patentansprüche 3 bis 9, bei welcher das erste Gleitsystem zwischen dem feststehenden Fahrgestell und dem ersten beweglichen Fahrgestell, umfasst:
- erste Schienen (R20, R21) des besagten feststehenden Fahrgestells (2) und erste Laufspuren (G301, G311) des besagten ersten beweglichen Fahrgestells (3) zum rollenden Zusammenwirken mit den besagten ersten Schienen (R20, R21),
- zweite Schienen (R301, R311) des besagten ersten beweglichen Fahrgestells (3) und zweite Rollen (G20, G21) des besagten feststehenden Fahrgestells (2) zum rollenden Zusammenwirken mit den besagten zweiten Schienen (R301, R311).

11. Vorrichtung nach Patentanspruch 2, alleine oder in Kombination mit einem der Patentansprüche 3 bis 10 genommen, bei welcher das zweite Gleitsystem zwischen dem ersten beweglichen Fahrgestell (3) und dem zweiten beweglichen Fahrgestell (4), umfasst:
- erste Schienen (R302, R312) des besagten ersten beweglichen Fahrgestells (3) und erste Rollen (G40, G41) des besagten zweiten beweglichen Fahrgestells (4) zum rollenden Zusammenwirken mit den besagten ersten Schienen (R302, R312),
- zweite Schienen (R40, R41) des besagten ersten beweglichen Fahrgestells (4) und zweite Rollen (G302, G312) des besagten ersten beweglichen Fahrgestells (3) zum rollenden Zusammenwirken mit den besagten zweiten Schienen (R40, R41).

12. Vorrichtung gemäß einem der Patentansprüche 10 bis 11, bei welcher das erste Gleitsystem und/oder das besagte zweite Gleitsystem aufweist:
- Rollen (G20, G21, G301, G311, G302, G312, G40, G41), insbesondere die besagten ersten Rollen und zweiten Rollen, mit horizontaler Drehachse, um dafür zu sorgen, dass sie jeweils rollend mit einem horizontalen Flügel einer Schiene zusammenzuwirken,
- Kugelträgersysteme (B20, B21, B301, B311, B302, B312; B40, B41), die derart ausgerichtet sind, um jeweils rollend mit einem vertikalen Flügel einer Schiene zusammenzuwirken, um eine seitliche Führung sicherzustellen.

13. Vorrichtung gemäß einem der Patentansprüche 1 bis 12, welche am hinteren Ende der Schiebeplattform (5) ein hervorstehendes Seitenwandsystem (100), welches zum Sicherstellen der Halterung der auf der Schiebeplattform (5) befindlichen Gegenstände vorgesehen ist, aufweist.

14. Vorrichtung gemäß dem Patentanspruch 13, bei welcher das besagte Seitenwandsystem von variabler Länge gemäß der Richtung in der Breite der Plattform ist, umfassend:
- ein Mittelteil (101) und zwei separate Seitenteile (102,103), welche jeweils das besagte Mittelteil (101) an dessen zwei Enden in Längsrichtung verlängern,
- Regelungsmittel, welche es ermöglichen, die Befestigung der Seitenteile (102,103) in unterschiedlichen Stellungen entlang der Länge des Mittelteils (101) sicherzustellen.

15. Vorrichtung gemäß dem Patentanspruch 14, bei welcher das Mittelteil (101) und die Seitenteile (102, 103) in Form von vertikalen Platten sind, wobei die Regelungsmittel längliche Öffnungen (104) aufweisen, welche entlang der Länge der Platten und entlang der Regelungsrichtung ausgerichtet sind, welche vorgesehen sind, um von Befestigungselementen wie zum Beispiel Schrauben gekreuzt zu werden.

16. Vorrichtung gemäß dem Patentanspruch 2, umfassend ein Verriegelungssystem für die Platte, welches sich mindestens in der besagten eingefahrenen Stellung und/oder in der besagten ausgefahrenen Stellung der Schiebeplattform bewegt, oder in einer Zwischenstellung, umfassend:
- ein bewegliches Element (110), welches einteilig mit dem zweiten beweglichen Fahrgestell (4) ist, welches in Richtung des feststehenden Fahrgestells hervorsteht, und ein entsprechendes Blockadeelement (120), welches einteilig mit dem feststehenden Fahrgestell (3) ist, wobei das besagte Verriegelungssystem (110) von einem Eingriffszustand, in welchem das Element mindestens eine Öffnung (O1, O2, O3) des Blockadeelements (120) durchdringt, zu einem eingefahrenen Zustand, in welchem das bewegliche Element der besagten Öffnung entkommt, übergehen kann,
- eine Bedienvorrichtung (130), welche auf Höhe des Randes vor der Schiebeplattform (5) angeordnet ist,
- ein mechanisches Getriebe (140) wie zum Beispiel eine Stange, welches die besagte Bedienvorrichtung mit dem besagten beweglichen Element verbindet und während einer Einwirkung auf das Bedienelement den Übergang des Verriegelungselements von dem Eingriffszustand in den eingefahrenen Zustand sicherstellt.

17. Vorrichtung gemäß dem Patentanspruch 16, bei welcher das Bedienelement (130) einen Druckknopf umfasst, welcher auf einem starr einteilig am zweiten beweglichen Fahrgestell (4) befestigten Griff angeordnet ist.

18. Vorrichtung gemäß einem der Patentansprüche 16 oder 17, bei welcher:
- das Blockadeelement (120) ein entlang der Länge des besagten feststehenden Fahrgestells (2) ausgerichtetes und mehrere Öffnungen (01, O2, O3) zur Blockade für das bewegliche Element (110) aufweisendes Profil umfasst,
- das besagte bewegliche Element entlang der Richtung des Blockadeelements unter dem Zwang einer Feder verschiebbar ist, wobei ein händischer Eingriff auf die Bedienvorrichtung (130) das bewegliche Element in seinen eingefahrenen Zustand zwingt.

19. Vorrichtung gemäß einem der Patentansprüche 1 bis 18, welches in der ausgefahrenen Stellung einen Einsatz von mindestens 80% der Länge der Schiebeplattform (5) auslegend von dem besagten feststehenden Fahrgestell (2) aufweist.

20. Kraftfahrzeug umfassend eine hintere Ladefläche mit zwei Radkästen, wobei die besagte hintere Fläche des Fahrzeugs mit einer Beladevorrichtung (1) mit Schiebeplattform gemäß einem der Patentansprüche 1 bis 19 versehen ist, deren seitliche Einbuchtungen (EC1, EC2) mit Einstellungsspiel die besagten Radkästen aufnehmen und sodass in der besagten eingefahrenen Stellung der Schiebeplattform (5) die Beladevorrichtung eine ebene Fläche auf der Gesamtheit der Breite der hinteren Fläche des besagten Fahrzeugs bildet.

21. Verfahren zur Herstellung einer Beladevorrichtung mit Schiebeplattform gemäß einem der Patentansprüche 1 bis 19, vorgesehen zum Ausrüsten eines Fahrzeugs, welches eine hintere Ladefläche umfasst, welche hervorstehend zwei Radkästen ausweist, wobei das besagte Verfahren die folgenden Schritte aufweist:
- Erhalten der Abmessungen der hinteren Fläche des Fahrzeugs,
- Auslegen der Hilfsplattformen (6 bis 9) derart, dass die Zusammenführung der Fläche der beweglichen Plattform (5) und der Fläche der Hilfsplattformen (6 bis 9) in der besagten eingefahrenen Stellung der Schiebeplattform eine Ebene, über die Gesamtheit der Breite der hinteren Fläche des besagten Fahrzeugs ununterbrochene Fläche bildet.

## Claims

1. Loading device (1) with a sliding platform, intended to equip the rear surface of a vehicle having projecting wheel arches, comprising:
- a fixed chassis (2) intended to be anchored on the rear loading surface of the vehicle,
- the sliding platform (5),
- a guidance system between the sliding platform (5) and said fixed chassis (2),
said sliding platform (5) being able to pass from a retracted position (P1) on the fixed chassis (2), to a deployed position (P2) projecting from said fixed chassis (2),
**characterised in that** the device comprises fixed auxiliary platforms (6, 7, 8, 9), carried by the fixed chassis (2), at the same level as the flat surface of the sliding platform (5), said auxiliary platforms (6 to 9) defining two lateral recesses (EC1, EC2) intended to have a shape complementary to said wheel arches, and **in that**, in said retracted position (P1) of the sliding platform (5), the auxiliary platforms (6, 7, 8, 9) laterally extend the flat surface of the sliding platform (5), and wherein the fixed chassis (2) comprises a frame formed by two longitudinal members (20, 21) and two cross-members (22, 23) secured by the ends thereof, and wherein supports (10 to 15) extending laterally from the longitudinal members (20, 21) towards the outside of the frame in order to hold the auxiliary platform (6, 7, 8, 9) projecting from the longitudinal members (20, 21).

2. Device according to claim 1, wherein said guidance system between the sliding platform (5) and said fixed chassis (2) comprises:
- a first movable chassis (3), able to slide with respect to the fixed chassis by means of a first runner system between the fixed chassis and the first movable chassis,
- a second movable chassis (4), able to slide with respect to the first movable chassis by means of a second runner system between the fixed chassis and the second movable chassis
and wherein said sliding platform (5) is rigidly secured to the second movable chassis (4).

3. Device according to claim 2, each support (10; 11; 12, 13; 14; 15) connecting one of the longitudinal members (20, 21) to the corresponding auxiliary platform (6; 7; 8; 9) comprises a square bracket formed by two tubular profiled members, at right angles to one another, abutting through their ends, said square bracket having, at one of the free ends thereof, a plate for fixing to the lateral surface of a longitudinal member and, at the other free end thereof, a plate for fixing with the underface of the auxiliary platform.

4. Device according to claim 2 or 3, wherein the fixed chassis (2) has a plurality of anchoring bars (24, 25, 26) distributed over the height of the frame, each of the anchoring bars connecting the two longitudinal members (20, 21) in a direction aslant with respect to the cross-members (22, 23), not perpendicular to the longitudinal members (20, 21).

5. Device according to claim 4, wherein each of the anchoring bars (24, 25, 26) comprises a plurality of bores (27) distributed over the length of the bar, said bores (27) being intended for adjusting the position of fixing members providing the fixing of said fixed chassis to the vehicle.

6. Device according to any of claims 1 to 5, wherein the sliding platform (5) comprises a plate (50), as well as peripheral protective profiled members (51 to 54), bordering the plate at least along the lateral edges thereof, or even along the rear edge thereof and the front edge thereof.

7. Device according to any of claims 1 to 6, wherein the auxiliary platforms (6 to 9) each comprise a plate (60; 70; 80; 90), as well as a protective profiled member (61; 71; 81; 91), bordering the inner edge of said plate (60; 70; 80; 90) intended to be in the immediate vicinity of the sliding platform (5) in said retracted position (P1).

8. Device according to claims 6 and 7, wherein the or at least some of the protective profiled members (61; 71; 81; 91) of the auxiliary platform and/of the or each protective profiled member (51; 52; 53) of the sliding platform (5) comprises a U-shaped section (16) receiving, with a fit clearance, the edge of the plate, extended by a tubular section, with the function of an attachment groove, with the same thickness (Ep), having a longitudinal upper slot emerging from the top wall of the tubular section forming the entrance of the groove.

9. Device according to any of claims 6 to 8, wherein the top surface of the edge of the plate (50; 60; 70; 80; 90) is shaped with a thickness corresponding to the thickness of a top flange of the profiled member (51; 52; 53; 54; 61; 71; 81; 91) overlapping the top surface of the plate, and wherein said shaped part of the plate receives, with a fit clearance, the top flange of the protective profiled member, said top surface of the protective profiled member fitting flush with the non-shaped top surface of said plate (50; 60; 70; 80; 90) juxtaposed with said protective profiled member.

10. Device according to claim 2 alone or taken in combination with any of claims 3 to 9, wherein the first runner system between the fixed chassis and the first movable chassis comprises:
- first rails (R20, R21) on said fixed chassis (2) and first rollers (G301, G311) on said first movable chassis (3) intended to engage with said first rails (R20, R21) so as to run on same,
- second rails (R301, R311) on the first movable chassis (3) and second rollers (G20, G21) on said fixed chassis (2) intended to engage with said second rails (R301, R311) so as to run on them.

11. Device according to claim 2 alone or taken in combination with any of claims 3 to 10, wherein the second runner system between the first movable chassis and the second movable chassis (4), comprises:
- first rails (R302, R312) on said first movable chassis (3) and first rollers (G40, G41) on said second movable chassis (4) intended to engage with said first rails (R302, R312) by running thereon,
- second rails (R40, R41) on the second movable chassis (4) and second rollers (G302, G312) on said first movable chassis (3) intended to engage on said second rails (R40, R41) by running thereon.

12. Device according to claims 10 and 11, wherein the first runner system and/or said second runner system has:
- rollers (G20, G21, G301, G311, G302, G312, G40, G41), in particular said first rollers and second rollers, with a horizontal rotation axis, intended to take the load, intended each to engage with a horizontal flange of a rail by running thereon,
- systems with a bearing ball (B20, B21, B301, B311, B302, B312, B40, B41), oriented so as to each engage with a vertical flange of a rail so as to run thereon in order to provide lateral guidance.

13. Device according to any of claims 1 to 12, having, at the rear of the sliding platform (5), a projecting tail-board system (100) intended to hold objects present on the sliding platform (5).

14. Device according to claim 13, in which said tail-board system has an adjustable length in the width direction of the platform, comprising:
- a central part (101) and two separate lateral parts (102, 103), respectively extending in length said central part (101) at these two ends,
- adjustment means for fixing the lateral parts (102, 103) at different positions over the length of the central part (101).

15. Device according to claim 14, wherein the central part (101) and the lateral parts (102, 103) are in the form of vertical panels, the adjustment means comprising oblong openings (104) oriented along the length of the panels and in the adjustment direction, intended to have fixing members such as bolts pass through them.

16. Device according to claim 2, comprising a system for locking the sliding plate at least in said retracted position and/or in said deployed position of the sliding platform, or even in an intermediate position, comprising:
- a movable member (110), secured to the second movable chassis (4), projecting in the direction of the fixed chassis, and a corresponding locking member (120) secured to the fixed chassis (3), said locking member (110) being able to pass from an engaged state in which the member enters at least one opening (01, 02, 03) in the locking member (120) to a retracted state in which the movable member escapes from said opening,
- a manoeuvring device (130), arranged at the front edge of the sliding platform (5),
- a mechanical transmission (140), such as a linkage, connecting said manoeuvring device to said movable member and providing the passage of the locking member from the engaged state to the retracted state when there is an action on the manoeuvring device.

17. Device according to claim 16, wherein the manoeuvring device (130) comprises a pushbutton, arranged on a handle rigidly secured to the second movable chassis (4).

18. Device according to claim 16 or 17, wherein:
- the locking member (120) comprises a profiled member oriented along the length of said fixed chassis (2) and having a plurality of locking openings (01, 02, 03) for the movable member (110),
- said movable member is movable in the direction of the locking member under the force of a spring, a manual action on the manoeuvring device (130) forcing the movable member towards the retracted state thereof.

19. Device according to any of claims 1 to 18, having a deployment of at least 80% of the length of the sliding platform (5) projecting from said fixed chassis (2) in said deployed position.

20. Motor vehicle, comprising a rear loading surface having, projecting, two wheel arches, said rear surface of the vehicle being equipped with a loading device (1) with a sliding platform according to any of claims 1 to 19, the lateral recesses (Ec1, Ec2) of which receive, with a fit clearance, said wheel arches and so that, in said retracted position of the sliding platform (5), the loading device forms a flat surface over the whole of the width of the rear surface of said vehicle.

21. Method for manufacturing a loading device with a sliding platform according to any of claims 1 to 19, intended to equip a vehicle comprising a rear loading surface having, projecting, two wheel arches, said method having the following steps:
- obtaining the dimensions of the rear surface of the vehicle,
- sizing the auxiliary platforms (6 to 9) so that, in said retracted position of the sliding platform, the joining of the surface of the movable platform (5) and the surface of the auxiliary platforms (6 to 9) forms a continuous flat surface over the whole of the width of the rear surface of said vehicle.
